# EUROPÄISCHE PATENTSCHRIFT

(11) **EP 0 519 305 B1**
(45) Veröffentlichungstag und Bekanntmachung des Hinweises auf die Patenterteilung: **05.04.1995**
(21) Anmeldenummer: 92109705.1
(22) Anmeldetag: 09.06.1992
(51) Int. Cl.: H02M 7/00

(54) **Stromrichterbaueinheit**
Converter assembly
Module de convertisseur

(30) Priorität: 21.06.1991 DE 9107692 U
(43) Veröffentlichungstag der Anmeldung: 23.12.1992
(73) Patentinhaber: SIEMENS AKTIENGESELLSCHAFT, 80333 München (DE)
(72) Erfinder: Dengler, Georg, W-8606 Hirschaid (DE); Springmann, Walter, Dipl.-Ing., W-8555 Adelsdorf (DE)

(56) Entgegenhaltungen:
- EP-A- 0 249 725
- EP-A- 0 375 776
- EP-A- 0 387 665
- DE-U- 8 909 246
- DE-U- 9 012 147
- US-A- 4 769 557

## Beschreibung

Die Erfindung bezieht sich auf eine Stromrichterbaueinheit mit wenigstens zwei Halbleiter-Leistungsmoduln je Wechselstromphase, die jeweils mit Innengewinde ausgebildeten elektrischen Anschlüssen versehen und auf einen Kühlkörper lösbar befestigt sind, und mit einer Leiterplatte, auf der mehrere elektrische Funktionselemente angeordnet sind.

Eine derartige Stromrichterbaueinheit ist aus der Siemens-Zeitschrift "Drive & Control", 1/91, Seiten 18 und 19, insbesondere Bild 2, bzw. aus dem Siemens-Prospekt "SIMOVERT P Spannungszwischenkreis-Umrichter 6SE12 für Antriebe bis 37 kW", Bestell-Nr. A19100-E319-A400, gedruckt Februar 1990, bekannt. Bei dieser Stromrichterbaueinheit ist die Leiterplatte zum Kühlkörper mit den Halbleiter-Leistungsmoduln beabstandet angeordnet und mittels elektrischer Leitungen mit diesen verbunden. Beim Aufbau von einer Stromrichterbaueinheit mittels Halbleiter-Leistungsmoduln, die jeweils ein abschaltbare Halbleiterventil enthalten, ist darauf zu achten, daß dieser Aufbau induktivitätsarm ist.

Der Erfindung liegt nun die Aufgabe zugrunde, eine Stromrichterbaueinheit der eingangs genannten Art so auszugestalten, daß sie bei kompakter Bauweise und großer Fertigungs- und Montagefreundlichkeit alle funktionell zusammengehörigen Elemente vereint und der Aufbau induktivitätsarm ist.

Diese Aufgabe wird erfindungsgemäß dadurch gelöst, daß diese Halbleiter-Leistungsmoduln jeweils in zwei räumlich beabstandeten Reihen derart angeordnet sind, daß ihre Steuer-Anschlüsse einem durch die beabstandeten Reihen gebildeten Raum zugewandt sind, und daß die Leiterplatte derart mit den Steuer-Anschlüssen lösbar verbunden ist, daß die Bauteile der elektrischen Funktionselemente in diesen gebildeten Raum hineinragen.

Damit werden Halbleiter-Leistungsmoduln, Kühlkörper sowie die für einen Stromrichter notwendigen Funktionselemente zu einer selbsttragenden, stabilen Einheit mit hoher Packungsdichte verbunden, mit der sich Stromrichter aller Art beispielsweise auch gesteuerte Gleichrichter, realisieren lassen. Durch die erfindungsgemäße Anordnung der Leiterplatte, wodurch die elektrischen Funktionselemente in den von den Halbleiter-Leistungsmoduln gebildeten Raum hineinragen, entsteht eine Ebene, auf der weitere Funktionselemente angebracht werden können, ohne dabei Stützkonstruktionen verwenden zu müssen. Außerdem sind so die Halbleiter-Leistungsmoduln auf kürzestem Wege mit ihren zugehörigen Ansteuerschaltungen verbunden. Ferner können weitere Funktionselemente auf kürzestem Wege mit den Halbleiter-Leistungsmoduln verbunden werden. Ein weiterer Vorteil dieses Aufbaus einer Stromrichtereinheit ist dieser, daß durch die eingebettete Leiterplatte die Bauelemente der elektrischen Funktionselemente gegen mechanische Beanspruchung geschützt sind.

Bei einer vorteilhaften Ausführungsform der Stromrichterbaueinheit ist eine Zwischenkreis-Kondensatorbatterie, bestehend aus einem Verschienungssystem und mehreren Kondensatoren, mittels langgestreckter Leiterelemente mit den Anschlüssen der Halbleiter-Leistungsmoduln lösbar verbunden. Eine derartige Kondensatorbatterie ist aus der DE 89 09 246 U1 bekannt. Aus der DE 26 11 260 C3 ist bekannt, daß mittels langgestreckter Leiterelemente, beispielsweise in Form von Metallhülsen, eine Leiterplatte elektrisch und mechanisch mit Halbleiter-Leistungsmoduln verbunden werden kann. Diese zielgerichtete Nutzung dieser Doppelfunktion trägt neben einer erheblich besseren Raumnutzung zu einer Erhöhung der Funktionssicherheit bei, da damit erhebliche Teile einer umständlichen, möglicherweise mit Fehlern behafteten Verdrahtung entfallen und die Gefahr undefinierter Leitungseinstreuungen vermieden wird. Durch die Verbindung der Zwischenkreis-Kondensatorbatterie mittels dieser langgestreckten Leiterelemente mit der Stromrichterbaueinheit entsteht eine modulare Einheit, die vorgefertigt und mit weiteren modularen Einheiten einfach zu einem Stromrichtergerät zusammengebaut werden kann.

Bei einer vorteilhaften Ausführungsform der Stromrichterbaueinheit mit versehener Zwischenkreis-Kondensatorbatterie sind die Randbereiche des Verschienungssystems dieser Zwischenkreis- Kondensatorbatterie mit für jedes Halbleiter-Leistungsmodul vorgesehenen Beschaltungsnetzwerks versehen. Ein derartiges Beschaltungsnetzwerk für schnellschaltende abschaltbare Halbleiterventile ist aus der DE 90 12 147 U1 bekannt. Durch die Zuordnung der Beschaltungsnetzwerke zur Zwischenkreis-Kondensatorbatterie und deren Verbindung mit der Stromrichterbaueinheit, entsteht eine vorgefertigte modulare Einheit, die werksseitig vollständig durchgeprüft werden kann, bevor diese modulare Einheit mit weiteren Komponenten zu einem Stromrichtergerät zusammengebaut wird.

Bei einer weiteren vorteilhaften Ausführungsform der Stromrichterbaueinheit sind als Befestigungsbohrungen in der Leiterplatte Langlochbohrungen vorgesehen, die jeweils innerhalb von zwei gegenüberliegenden bauelementefreien Randbereiche der Leiterplatte korrespondierend zu den Steuer-Anschlüssen angeordnet sind. Durch die Verwendung von Langlochbohrungen können sowohl Fertigungstoleranzen der Halbleiter-Leistungsmoduln und Fertigungstoleranzen der Stromrichterbaueinheit als auch unterschiedliche Anschlußtoleranzen bzw. Anschlußmaße der Module unterschiedlicher Hersteller ausgeglichen werden.

Zur weiteren Erläuterung der Erfindung wird auf die Zeichnung Bezug genommen, in der eine Ausführungsform der erfindungsgemäßen Stromrichterbaueinheit schematisch veranschaulicht ist.
- Figur 1: zeigt ein Ersatzschaltbild eines Stromrichters mit funktionell zusammengehörigen Elementen,
- Figur 2: veranschaulicht eine Schnittdarstellung durch eine erfindungsgemäße Stromrichterbaueinheit, in der
- Figur 3: ist eine Draufsicht auf die Bauelementeseite der Leiterplatte nach Figur 2 näher dargestellt, die
- Figur 4: stellt die Stromrichterbaueinheit mit einer zugehörigen Zwischenkreis-Kondensatorbatterie dar und in
- Figur 5: ist eine komplett vorgefertigte modulare Einheit eines Stromrichtergeräts gemäß dem Ersatzschaltbild nach Figur 1 dargestellt.

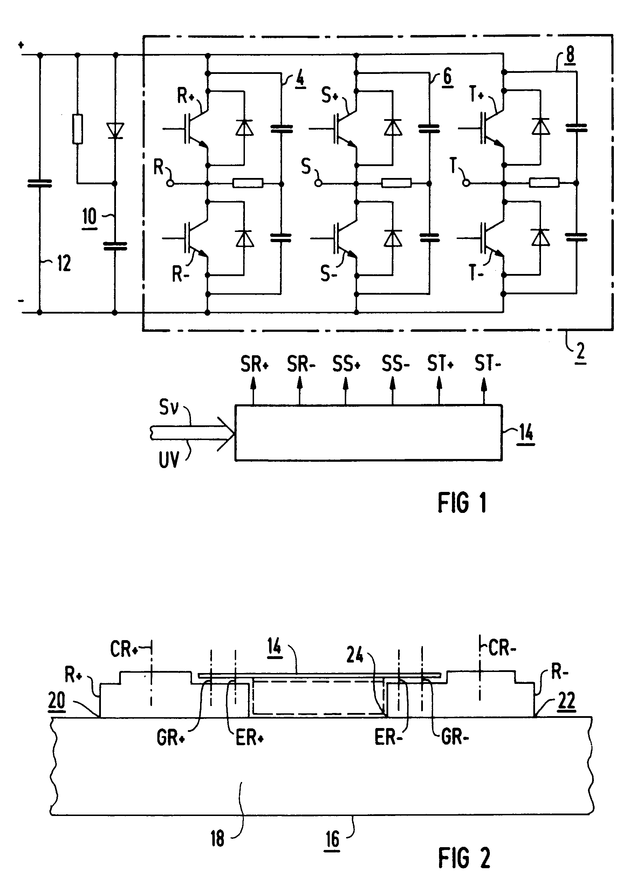

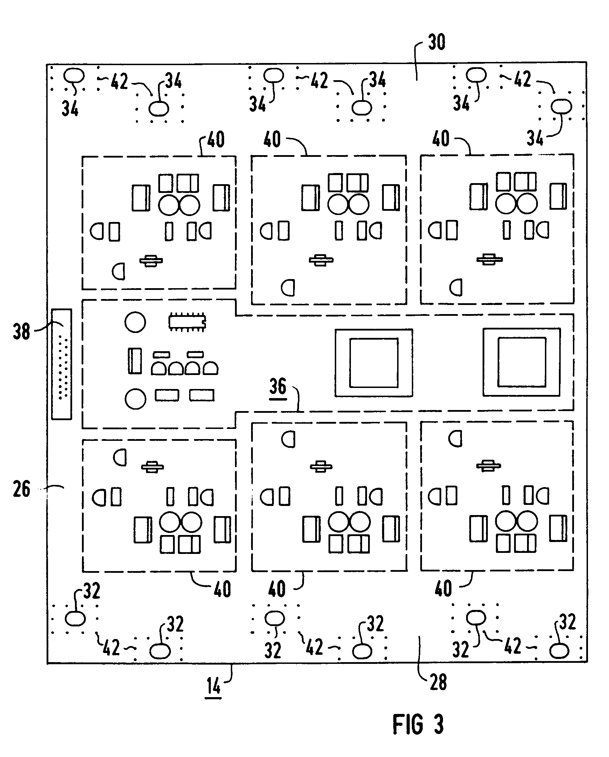

Das in Figur 1 dargestellte Ersatzschaltbild zeigt schematisch den Aufbau eines Stromrichters 2 mit Beschaltungsnetzwerken 4, 6, 8 und 10, einer Zwischenkreis-Kondensatorbatterie 12 und einer Leiterplatte 14, auf der mehrere elektrische Funktionselemente angeordnet sind. Die Wirkungsweise der Beschaltungswerke 4, 6 und 8 für jeden Phasenbaustein des Stromrichters 2 und das Beschaltungsnetzwerk 10 für den Stromrichter 2 ist in der DE 90 12 147 U1 im einzelnen beschrieben. Jeder Phasenbaustein des Stromrichters 2 besteht aus zwei Halbleiter-Leistungsmoduln R+ und R- bzw. S+ und S- bzw. T+ und T-, die elektrisch in Reihe und elektrisch parallel zur Zwischenkreis-Kondensatorbatterie 12 geschaltet sind. In dieser Darstellung sind als Halbleiterventile Insulated-Gate-Bipolar-Transistoren (IGBT) vorgesehen. Jedoch können auch andere abschaltbare Halbleiterventile, wie Transistoren oder Gate-Turn-Off-Thyristoren (GTO-Thyristoren), vorgesehen sein, die ebenfalls mit den dargestellten Beschaltungsnetzwerken beschaltet werden. An den Wechselstromanschlüssen R, S und T der Phasenbausteine des Stromrichters 2 kann eine nicht näher dargestellte Last oder ein Netz angeschlossen sein. D.h., der dargestellte Stromrichter 2 kann einerseits als Wechselrichter oder als gesteuerter Gleichrichter betrieben werden. Die zugehörige Leiterplatte 14 ist im einzelnen in der Figur 3 näher dargestellt. Diese Leiterplatte 14 erzeugt aus Steuersignalen S_{ν} einer nicht näher dargestellten übergeordneten Steuer- und Regelungseinrichtung und einer Versorgungsspannung UV für jedes Halbleiter-Leistungsmodul R+,R-,S+-S-,T+ und T- eine entsprechende Ansteuerleistung.

Die Figur 2 zeigt eine Schnittdarstellung einer erfindungsgemäßen Stromrichterbaueinheit 16, die aus einem Kühlkörper 18, aus den Halbleiter-Leistungsmoduln R+,...,T-, von denen in dieser Darstellung nur die Halbleiter-Leistungsmoduln R+ und R- zu sehen sind, und aus der Leiterplatte 14 besteht. Die Halbleiter-Leistungsmoduln R+,...,T- sind elektrisch isolierend jedoch thermisch gut leitend, mit dem Kühlkörper 18 lösbar verbunden. Dabei sind die Halbleiter-Leistungsmoduln R+,S+ und T+ und die Halbleiter-Leistungsmoduln R-,S- und T-jeweils in einer Reihe 20 bzw. 22 angeordnet. Diese beiden Reihen 20 und 22 verlaufen räumlich parallel und beabstandet zueinander. Die Halbleiter-Leistungsmoduln R+,...,T- sind in den beiden Reihen 20 und 22 derart angeordnet, daß ihre Steuer-Anschlüsse ER+,GR+,ER-,GR-,...,ET+, GT+,ET-,GT- dem durch die räumlich beabstandeten Reihen 20 und 22 entstandenen Raum 24 zugewandt sind. Die Anschlüsse jedes Halbleiter-Leistungsmoduls weist ein Innengewinde auf. Die Leiterplatte 14 ist derart mit den Steuer-Anschlüssen ER+, GR+,...,ET-,GT- der Halbleiter-Leistungsmoduln R+,..., T-elektrisch leitend lösbar verbunden, daß die Bauelemente der elektrischen Funktionselemente in den gebildeten Raum 24 hineinragen. Wegen der Übersichtlichkeit sind die einzelnen Bauelemente der Leiterplatte 14 nicht im einzelnen dargestellt, sondern werden durch einen mittels einer unterbrochenen Linie eingeschlossenen Raum repräsentiert. Bei dieser erfindungsgemäßen Anordnung der Stromrichterbaueinheit 16 ist die Leiterplatte 14 zwischen den Halbleiter-Leistungsmoduln R+,..., T- eingebettet, wodurch sich die Gesamthöhe dieser Stromrichterbaueinheit gegenüber eingangs genannten Ausführungen auf die Gesamthöhe von Kühlkörper mit Halbleiter-Leistungsmodul beschränkt. Außerdem sind durch die Einbettung der Leiterplatte 14 die Bauelemente der elektrischen Funktionselemente gegen mechanische Beanspruchung geschützt.

In der Figur 3 ist die Draufsicht auf die Bestückungsseite 26 bzw. Bauteileseite 26 der Leiterplatte 14 schematisch im einzelnen dargestellt. Diese Leiterplatte 14 weist zwei gegenüberliegende bauelementefreie Randbereiche 28 und 30 auf, die mit Langlöcher 32 bzw. 34 versehen sind. Die Lage der Löcher 32 bzw. 34 zueinander hängt von den Steuer-Anschlüssen ER+,..., GT- der verwendeten Halbleiter-Leistungsmoduln R+,...,T- ab. Zwischen diesen beiden Randbereichen 28 und 30 sind als elektrische Funktionselemente beispielsweise eine getaktete Stromversorgung 36, eine Kontakteinheit 38 und sechs Ansteuerschaltungen 40 untergebracht. Jedes Funktionselement 36 und 40 weist nicht näher bezeichnete Bauelemente auf. Jede Ansteuerschaltung 40 verfügt außerdem über eine Schaltung zur Überspannungsbegrenzung. Da die Schaltung der Ansteuerschaltung 40 vom verwendeten Halbleiterventil und vom verwendeten Halbleiter-Leistungsmodul abhängig ist, wurde auf eine beispielhafte Angabe einer derartigen Schaltung verzichtet. Über die Kontakteinheit 38 werden mittels eines mehrsträngigen Flachbandkabels Steuersignale S einer übergeordneten Steuer- und Regeleinrichtung und eine Versorgungsspannung UV der Leiterplatte 14 zugeführt. Aus diesen Signalen wird mit Hilfe der vorhandenen elektrischen Funktionselemente 36 und 40 für jedes Halbleiter-Leistungsmodul R+,...,T- eine Ansteuerleistung generiert. Um die Langlöcher 32 und 34 weist die Leiterplatte 14 auf der Lötseite großflächige Leiterbahnen 42 auf. Diese sind jeweils durch einen punktierten umrahmten Bereich gekennzeichnet.

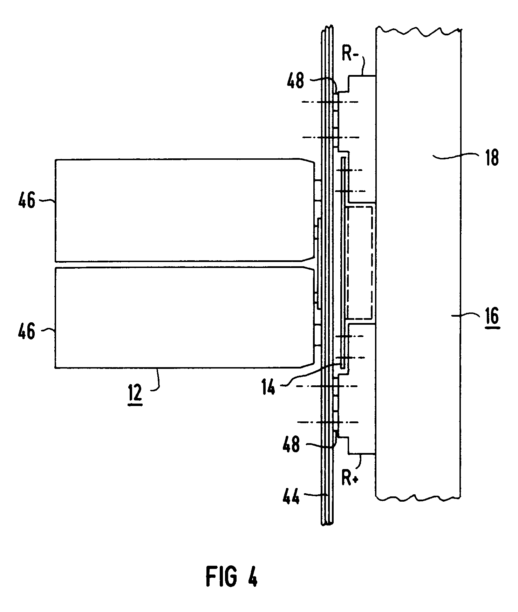

In der Figur 4 ist die Stromrichterbaueinheit 16 nach Figur 2 mit einer zugehörigen Zwischenkreis-Kondensatorbatterie 12 dargestellt. Diese Zwischenkreis-Kondensatorbatterie 12 besteht aus einem Verschienungssystem 44 und mehreren Kondensatoren 46. Eine derartige Kondensatorbatterie 12, insbesondere das Verschienungssystem 44, ist aus der DE 89 09 246 U1 bereits bekannt, wodurch auf eine ausführliche Beschreibung der Kondensatorbatterie 12 an dieser Stelle verzichtet werden kann. Da die Leiterplatte 14 mit den elektrischen Funktionselementen zwischen den Halbleiter-Leistungsmoduln R+, ...,T- eingebettet ist, kann die Kondensatorbatterie 12 mit dem Verschienungssystem 44 mit langgestreckten Leiterelementen 48 mit den Halbleiter-Leistungsmoduln R+,...,T-lösbar verbunden werden. Dabei können diese langgestreckten Leiterelemente 48, die die Form einer Metallhülse haben, am Verschienungssystem 44 verliersicher befestigt sein. Die Metallhülsen 48 dienen nicht nur als Träger für die Zwischenkreis-Kondensatorbatterie 12, sondern gleichzeitig als verlängerte Anschlüsse CR+,CS+,CT+,ER-,ES-und ET- der Halbleiter-Leistungsmoduln R+,...,T-. Derartige Metalhülsen 48 sind aus der DE 26 11 260 C2 bekannt.

Wie dieser Darstellung zu entnehmen ist, sind die Kondensatoren 46 symmetrisch zu einer nicht näher bezeichneten Symmetrieachse der Leistungsmodul-Anordnung aufgereiht. Das Verschienungssystem 44 ragt über die Leistungsmodul-Anordnung jedoch nicht über die Grundabmessung des Kühlkörpers 14 hinaus. Dadurch sind in diesem Fall zwei gegenüberliegende Randbereiche des Verschienungssystems 44 für zusätzliche Funktionselemente frei. Die Kondensatoren 46 dieser Zwischenkreis-Kondensatorbatterie 12 können auch einen Ring bilden, so daß für zusätzliche Funktionselemente inmitten der Kondensatoranordnung und rings um sie herum Platz ist.

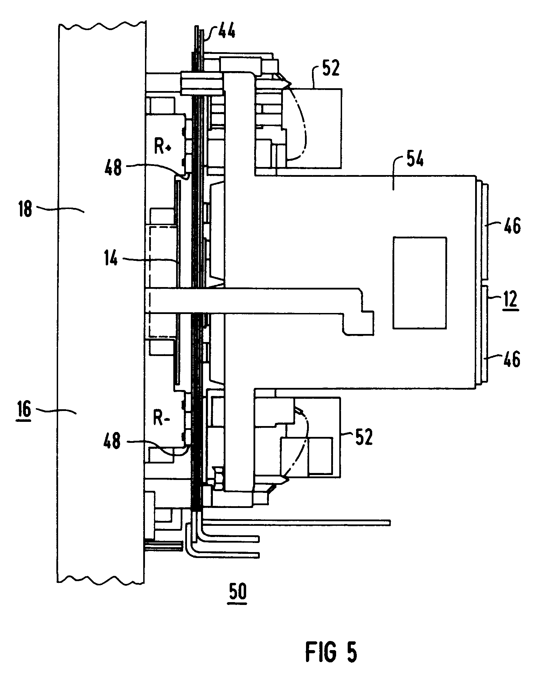

Die Figur 5 zeigt eine modulare Einheit 50, die aus der Stromrichterbaueinheit 16 nach Figur 2, aus der Zwischenkreis-Kondensatorbatterie 12 nach Figur 4 und aus mehreren Beschaltungsnetzwerken 52 aufgebaut ist. Diese Beschaltungsnetzwerke 52 sind oberhalb und unterhalb der Kondensatoranordnung auf dem Verschienungssystem 44 der Kondensatorbatterie 12 angeordnet. Dadurch sind diese Beschaltungsnetzwerke 52 auf kürzestem Wege jeweils mit seinem zugehörigen Halbleiter-Leistungsmodul R+, ...,T-verbunden. Der kompakte Aufbau jedes Beschaltungsnetzwerkes 52 und die gezeigte Verbindung zu den einzelnen Halbleiter-Leistungsmoduln R+,...,T-repräsentiert einen niederinduktiven Aufbau. Aus der EP 0 249 725 B1 ist ein kompakt aufgebauter Hochspannungsschütz auf Halbleiterbasis bekannt, wobei dem Leistungshalbleiter jeweils ein Beschaltungsnetzwerk, insbesondere ein RCD-Netzwerk, zugeordnet ist. Aus der DE 90 12 147 U1 ist ein weiteres Beschaltungsnetzwerk für schnellschaltende Halbleiterventile bekannt, die ebenfalls für diese modulare Einheit 50 verwendet werden kann. Da die Kondensatoren 46 der Kondensatorbatterie 12 nur elektrisch leitend mit dem Verschienungssystem verbunden sind, ist für die mechanische Befestigung dieser Kondensatoren 46 eine Ummantelung 54 vorgesehen, die ebenfalls über Isolierhülsen mit dem Kühlkörper 18 lösbar verbunden ist.

In Verbindung mit der erfindungsgemäßen Stromrichterbaueinheit 16 und der bekannten Zwischenkreis-Kondensatorbatterie 12 besteht die Möglichkeit, einen Stromrichter 2, dessen elektrisches Ersatzschaltbild in der Figur 1 dargestellt ist, und der selbsttragend alle wesentliche elektrischen und mechansichen Funktionselemente vereint, zu fertigen. Eine derartige modulare Einheit 50 kann komplett vorgefertigt werden und mit geringem Aufwand zu einem Stromrichtergerät vervollständigt werden. Diese modulare Einheit 50 bleibt bei aller Kompaktheit montage- und wartungsfreundlich. Als Folge des kompakten Aufbaus ist gegenüber konventionellen getrennten Aufbauten die elektrische Verdrahtung wesentlich gekürzt und damit wesentlich einfacher und wesentlich weniger störanfällig.

Dieser kompakte Aufbau dieser modularen Einheit 50 beruht darauf, daß die Leiterplatte 14 zwischen den Halbleiter-Leistungsmoduln R+,...,T- mit der Bauteileseite 26 eingebettet ist. Somit wird die bestehende Bauhöhe von Halbleiter-Leistungsmoduln R+,...,T- auf einen Kühlkörper durch die funktionsmäßig zugehörige Leiterplatte 14 nicht vergrößert, so daß in Verbindung mit dem Aufbau der Zwischenkreis-Kondensatorbatterie 12 die Kompaktheit nur noch vom Bauvolumen der verwendeten Bauelemente abhängt.

## Patentansprüche

1. Stromrichterbaueinheit (16) mit einer Zwischenkreis-Kondensatorbatterie (12) und wenigstens zwei Halbleiter-Leistungsmoduln (R+,R-,S+,S-,T+,T-) je Wechselstromphase (R,S, T), die jeweils mit Innengewinde ausgebildeten elektrischen Anschlüssen (ER+,GR+,CR+,ER-,GR-,CR-,...,ET+,GT+, CT+,ET-,GT-,CT-) versehen und auf einen Kühlkörper (18) lösbar befestigt sind, und mit einer Leiterplatte (14), auf der mehrere elektrische Funktionselemente (36,40) angeordnet sind, **dadurch gekennzeichnet,** daß diese Halbleiter-Leistungsmoduln (R+,R-,S+,S-,T+,T-) jeweils in zwei räumlich beabstandeten Reihen (20,22) derart angeordnet sind, daß ihre Steuer- Anschlüsse (ER+,GR+,ER-,GR-, ...,ET+,GT+,ET-,GT-) einem durch die beabstandeten Reihen (20,22) gebildeten Raum (24) zugewandt sind, und daß die Leiterplatte (14) derart mit den Steuer-Anschlüssen (ER+, ER-,GR+,GR-,...,ET+,ET-,GT+,GT-) lösbar verbunden ist, daß die Bauteile der elektrischen Funktionselemente (36,40) in diesen gebildeten Raum (24) hineinragen.

2. Stromrichterbaueinheit (16) nach Anspruch 1, **dadurch gekennzeichnet,** daß diese Zwischenkreis-Kondensatorbatterie (12), bestehend aus einem Verschienungssystem (44) und mehreren Kondensatoren (46), mittels langgestreckter Leiterelemente (48) mit den Anschlüssen (CR+,CR-,ER+,ER-,..., CT+,CT-,ET+,ET-) der Halbleiter-Leistungsmoduln (R+,R-,S+,S-, T+,T-) lösbar verbunden sind.

3. Stromrichterbaueinheit (16) nach Anspruch 2, **dadurch gekennzeichnet,** daß die Randbereiche des Verschienungssystems (44) mit für jedes Halbleiter-Leistungsmodul (R+,R-,S+,S-,T+,T-) vorgesehenen Beschaltungsnetzwerken (52) versehen sind.

4. Stromrichterbaueinheit (16) nach Anspruch 1, **dadurch gekennzeichnet,** daß als Befestigungsbohrungen in der Leiterplatte (14) Langlochbohrungen (32,34) vorgesehen sind, die jeweils innerhalb von zwei gegenüberliegenden bauelementenfreien Randbereichen (28,30) dieser Leiterplatte (14) korrespondierend zu den Steuer-Anschlüssen (ER+,GR+,ER-,GR-, ...,ET+,GT+,ET-,GT-) angeordnet sind.

5. Stromrichterbaueinheit (16) nach Anspruch 4, **dadurch gekennzeichnet,** daß eine Kontakteinheit (38) vorgesehen ist, die an einer die beiden bauelementfreien Randbereiche (28,30) verbindenden Seite der Leiterplatte (14) angeordnet ist.

6. Stromrichterbaueinheit (16) nach Anspruch 1, **dadurch gekennzeichnet,** daß jedes Halbleiter-Leistungsmodul (R+,R-,S+,S-,T+,T-) ein abschaltbares Halbleiterventil aufweist.

## Claims

1. A converter assembly (16) with a link-capacitor bank (12) and at least two semiconductor power modules (R+, R-, S+, S-, T+, T-) in respect of each a.c. phase (R,S,T) which are each provided with electrical terminals (ER+, GR+, CR+, ER-, GR-, CR-, ..., ET+, GT+, CT+, ET-, GT-, CT-) formed with inner threading and are detachably fixed on a heat sink (18), and with a circuit board (14) on which a plurality of electrical function elements (36, 40) are arranged, characterised in that these semiconductor power modules (R+, R-, S+, S-, T+, T-) are in each case arranged in two spaced apart rows (20, 22) in such manner that their control terminals (ER+, GR+, ER-, GR-..., ET+, GT+, ET-, GT-) face towards a space (24) formed by the spaced apart rows (20, 22), and that the circuit board (14) is detachably connected to the control terminals (ER+, ER-, GR+, GR-,..., ET+, ET-, GT+, GT-) in such manner that the components of the electrical function elements (36, 40) project into this formed space (24).

2. A converter assembly (16) as claimed in Claim 1, characterised in that this link-capacitor bank (12), consisting of a rail system (44) and a plurality of capacitors (46), is detachably connected by means of elongate conductor elements (48) to the terminals (CR+, CR-, ER+, ER-,..., CT+, CT-, ET+, ET-) of the semiconductor power modules (R+, R-, S+, S-, T+, T-).

3. A converter assembly (16) as claimed in Claim 2, characterised in that the edge zones of the rail system (44) are provided with wiring networks (52) provided for each semiconductor power module (R+, R-, S+, S-, T+, T-).

4. A converter assembly (16) as claimed in Claim 1, characterised in that slotted bores (32, 34) are provided as fixing bores in the circuit board (14), which slotted bores (32, 34) are in each case arranged within two oppositely disposed edge zones (28, 30), free of components, of this circuit board (14) in correspondence with the control terminals (ER+, GR+, ER-, GR-,..., ET+, GT+, ET-, GT-).

5. A converter assembly (16) as claimed in Claim 4, characterised in that a contact unit (38) is provided which is arranged on a side of the circuit board (14) which connects the two edge zones (28, 30) which are free of components.

6. A converter assembly (16) as claimed in Claim 1, characterised in that each semiconductor power module (R+, R-, S+, S-, T+, T-) exhibits a disconnectable semiconductor valve.

## Revendications

1. Module de convertisseur (16) comportant une batterie de condensateurs (12) du circuit intermédiaire et au moins deux modules de puissance à semiconducteurs (R+,R-, S+,S-,T+,T-) qui sont prévus pour chaque phase (R,S,T) du courant alternatif et sont équipés chacun de bornes électriques (ER+, GR+,CR+, ER-,GR-,CR-,...,ET+,GT+,CT+,ET-,GT-, CT-) comportant un taraudage et sont fixés de façon amovible à un refroidisseur (18), et comportant une plaquette à circuits imprimés (14), sur laquelle sont disposés plusieurs éléments électriques fonctionnels (36,40), caractérisé par le fait que ces modules de puissance à semiconducteurs (R+,R-, S+,S-,T+,T-) sont disposés respectivement suivant deux rangées (20,22) distantes dans l'espace, de sorte que leurs bornes de commande (ER+,GR+,ER-,GR-,..., ET+,GT+,ET-,GT-) sont tournées vers un espace (24) formé par les rangées distantes (20,22), et que la plaquette à circuits imprimés (14) est reliée de façon amovible aux bornes de commande (ER+,ER-, GR+,GR-, ..., ET+,ET-, GT+,GT-) de telle sorte que les composants des éléments électriques fonctionnels (36,40) pénètrent dans cet espace formé (24).

2. Module de convertisseur (16) suivant la revendication 1, caractérisé par le fait que cette batterie de condensateurs (12) du circuit intermédiaire, qui est constituée d'un système de liaison par rails (44) et de plusieurs condensateurs (46), est reliée de façon amovible, au moyen d'éléments conducteurs allongés (48), aux bornes (CR+,CR-,ER+,ER-,..., CT+,CT-,ET+,ET-) des modules de puissance à semiconducteurs (R+,R-,S+,S-, T+,T-).

3. Module de convertisseur (16) suivant la revendication 2, caractérisé par le fait que les zones marginales du système de liaison par rails (44) sont équipées de réseaux de câblage (52), qui sont prévus pour chaque module de puissance à semiconducteurs (R+,R-,S+,S-,T+,T-).

4. Module de convertisseur (16) suivant la revendication 1, caractérisé par le fait qu'il est prévu, comme perçages de fixation dans la plaquette à circuits imprimés (14), des perçages allongés (32,34), qui sont disposés respectivement à l'intérieur de deux zones marginales (28,30) de cette plaquette à circuits imprimés (14), qui sont situées en vis-à-vis et ne comportent aucun composant, d'une manière qui correspond aux bornes de commande (ER+,GR+,ER-,GR-, ..., ET+, GT+, ET-, GT-).

5. Module de convertisseur (16) suivant la revendication 4, caractérisé par le fait qu'il est prévu une unité de contact (38), qui est disposée sur un côté de la plaquette à circuits imprimés (14), qui relie les deux zones marginales (28,30) sans composants.

6. Module de convertisseur (16) suivant la revendication 1, caractérisé par le fait que chaque module de puissance à semiconducteurs (R+,R-,S+,S-,T+,T-) a une valve à semiconducteurs pouvant être déconnectée.
